# EUROPÄISCHE PATENTSCHRIFT

(11) **EP 0 641 521 B1**
(45) Veröffentlichungstag und Bekanntmachung des Hinweises auf die Patenterteilung: **06.05.1999**
(21) Anmeldenummer: 94112800.1
(22) Anmeldetag: 17.08.1994
(51) Int. Cl.: A23L 2/70, C12H 1/04

(54) **Verfahren zur Entfernung von Aluminiumionen aus Getränken**
Process for the removal of aluminium ions from beverages
Procédé pour éliminer des ions aluminium de boissons

(30) Priorität: 26.08.1993 DE 4328669
(43) Veröffentlichungstag der Anmeldung: 08.03.1995
(73) Patentinhaber: BASF Aktiengesellschaft, 67063 Ludwigshafen (DE)
(72) Erfinder: Fussnegger, Bernhard, Dr., D-67489 Kirrweiler (DE); Detering, Juergen, Dr., D-67117 Limburgerhof (DE)

(56) Entgegenhaltungen:
- EP-A- 0 438 713
- DE-A- 1 945 749
- US-A- 3 878 310

## Beschreibung

Die Erfindung betrifft den Einsatz eines Polymerisates auf Basis eines basischen Vinylheterocyclus mit einem pKₐ-Wert von mindestens 3,8 zur Entfernung von Aluminiumionen aus Getränken.

Ursache für einen Aluminiumgehalt von Getränken können u.a. technologische Hilfsstoffe mineralischer Art sein, beispielsweise Kieselgur, Perlite oder Bentonit, mit denen die Getränke behandelt wurden. In Wein und weinähnlichen Getränken, also Weinen aus Stein-, Kern- und Beerenobst, sind Aluminiumionen von Natur aus bzw. durch kellertechnologische Behandlungen bedingt in Konzentrationen von 0,3 bis > 10 mg/l enthalten und können dort vor allem bei höheren Konzentrationen unerwünschte Farbveränderungen sowie Trübungen verursachen. In Bier sind ebenfalls Aluminiumionenkonzentraitonen über 1 mg/l unerwünscht, weil auch hier Eintrübungen erfolgen können.

Gemäß dem Stand der Technik werden Aluminiumionen aus Getränken mittels Kationenaustauschern entfernt, sofern diese für Getränke zulässig sind. Kationenaustauscher geben Ionen an das Getränk ab, die dieses in seiner Zusammensetzung verändern. Dies kann die unterschiedlichsten unerwünschten Folgen haben wie Änderungen des pH-Werts, des Geschmacks und der Farbe.

Der Erfindung lag daher die Aufgabe zugrunde, ein verbessertes Verfahren zur Entfernung von Aluminiumionen aus Getränken zu entwickeln.

Diese Aufgabe wird gelöst durch ein Verfahren zur Entfernung von Aluminiumionen aus Getränken, wobei man das Getränk pro 100 l mit 5 bis 2500 g eines Polymerisates behandelt, das 50 bis 99,5 Gew.-% mindestens eines basischen Vinylheterocyclus mit einem pKₐ-Wert von mindestens 3,8 und 0 bis 49,5 Gew.-% eines anderen copolymerisierbaren Monomeren einpolymerisiert enthält, und das unter Ausschluß von Sauerstoff und von Polymerisationsinitiatoren sowie in Gegenwart von 0,5 bis 10 Gew.-%, bezogen auf die Monomeren, eines Vernetzers hergestellt worden ist.

Gemäß EP-A-4 38 713 werden die gleichen Polymeren zur Entfernung von Schwermetallen aus Wein und weinähnlichen Getränken eingesetzt. Überraschenderweise lassen sich diese Polymere auch zur Entfernung von Aluminiumionen verwenden, und zwar werden diese sehr viel rascher als Schwermetalle absorbiert. Dies ist insbesondere für die Behandlung von Bier von Interesse, aber auch von Fruchtsäften. Auch Wein und weinähnliche Getränke können auf diese Weise von Aluminiumionen befreit werden.

Die Polymerisationsbedingungen sind: Ausschluß von Sauerstoff und von Polymerisationsinitiatoren; Gegenwart von 0,5 bis 10, vorzugsweise 1 bis 4 %, bezogen auf das Gesamtmonomerengewicht, eines Vernetzers; Temperatur im Bereich von 30 bis 200, vorzugsweise 40 bis 100°C.

Unter basischen Vinylheterocyclen sind hier gesättigte und aromatisch ungesättigte Heterocyclen mit einer Vinylgruppe und mindestens einem basischen tertiären Ring-Stickstoffatom mit einem pKₐ von mindestens 3,8 zu verstehen. Außer der Vinylgruppe kann der Ring auch Alkylgruppen mit 1 bis 4 Kohlenstoffatomen, Phenyl- oder Benzyl-Gruppen oder auch einen anellierten zweiten Ring tragen. Als Beispiele seien genannt: N-Vinylimidazol (VI) sowie Derivate wie 2-Methyl-1-vinylimidazol, 4-Methyl-1-vinylimidazol, 5-Methyl-1-vinylimidazol, 2-Ethyl-1-vinylimidazol, 2-Propyl-1-vinylimidazol, 2-Isopropyl-1-vinylimidazol, 2-Phenyl-1-vinylimidazol, 1-Vinyl-4,5-benzimidazol. Weiterhin können beispielsweise eingesetzt werden: 2-Vinylpyridin, 4-Vinylpyridin sowie 2-Methyl-5-vinylpyridin. Selbstverständlich können auch Gemische von basischen Vinylheterocyclen untereinander eingesetzt werden.

Geeignete Vernetzer sind solche, die zwei oder mehr radikalisch copolymerisierbare Vinylgruppen im Molekül enthalten. Besonders geeignet sind Alkylenbisacrylamide wie Methylenbisacrylamid und N,N'-Bisacryloylethylendiamin, außerdem N,N'-Divinylethylenharnstoff, N,N'-Divinylpropylenharnstoff, Ethyliden-bis-3-(N-vinylpyrrolidon) sowie N,N'-Divinyldiimidazolyl-(2,2')- und 1,1'-Bis(3,3'-vinylbenzimidazolid-2-on)-1,4-butan. Andere brauchbare Vernetzungsmittel sind beispielsweise Alkylenglykoldi(meth)acrylate wie Ethylenglykoldi(meth)acrylat und Tetramethylenglykoldi(meth)acrylat, aromatische Divinylverbindungen wie Divinylbenzol und Divinyltoluol sowie Allylacrylat, Divinyldioxan, Pentaerythrit-triallylether und deren Gemische. Bei Polymerisation in Gegenwart von Wasser sind sie natürlich nur geeignet, soweit sie in der wäßrigen Monomermischung löslich sind.

Das gleiche gilt selbstverständlich für die Comonomeren, die in Mengen bis zu 49,5, vorzugsweise bis zu 40 Gew.-%, bezogen auf die gesamte Monomermischung, einpolymerisiert werden können. Als solche kommen beispielsweise in Betracht Styrol, Acrylester, Vinylester, Acrylamid, vorzugsweise N-Vinyllactame wie 3-Methyl-N-vinylpyrrolidon, insbesondere N-Vinylcaprolactam und N-Vinylpyrrolidon (VP).

Zur Durchführung der Polymerisation ohne Lösungsmittel wird das Monomerengemisch, bestehend aus basischem Vinylheterocyclus, dem vernetzenden Agens und gegebenenfalls N-Vinyllactam oder einem anderen Comonomeren, durch Einleiten von Stickstoff inertisiert und anschließend auf 100 bis 200, vorzugsweise 150 bis 180°C erhitzt. Vorteilhaft ist es, wenn in die Mischung weiter ein schwacher Stickstoffstrom eingeleitet wird. Besonders vorteilhaft ist es, wenn der Ansatz durch Anlegen von Vakuum zum Sieden gebracht wird. Je nach Art der eingesetzten Monomeren und der gewählten Temperatur polymerisiert dann die Mischung innerhalb 1 bis 20 Stunden. Beispielswiese bilden sich bei der Polymerisation von 2-Methyl-1-vinylimidazol mit 2 % N,N'-Divinylethylenharnstoff bei 150°C unter Rühren mit einem kräftigen Rührwerk und einem Druck von 310 mbar nach 2,5 h die ersten Polymerisatteilchen, die langsam zunehmen, bis nach 10 h der Ansatz aus einem bräunlichen Pulver besteht. Nach Auswaschen mit Wasser und Trocknen wird das neue Polymere in Ausbeuten von über 90 % in Form eines groben Pulvers erhalten.

Eine bevorzugte Herstellungsart ist die Fällungspolymerisation in Wasser. Die Konzentration der Monomeren im Reaktionsansatz wird zweckmäßigerweise so gewählt, daß der Ansatz über die gesamte Reaktionsdauer hinweg gut rührbar bleibt. Bei zu wenig Wasser werden die Polymerisatkörner nämlich klebrig, so daß ein Rühren schwieriger wird als ganz ohne Wasser. Bei den üblichen Rührkesseln liegt die zweckmäßige Monomerenkonzentration, bezogen auf die wäßrige Mischung, bei ca. 5 bis 30, vorzugsweise 8 bis 15 Gew.-%. Man kann sie bis auf 50 Gew.-% steigern, wenn kräftige Rührwerke zur Verfügung stehen. Es kann auch zweckmäßig sein, die Polymerisation mit einer relativ konzentrierten Lösung zu beginnen und dann im Verlauf der Reaktion mit Wasser zu verdünnen. Die Polymerisation wird zweckmäßigerweise bei pH-Werten über 6 durchgeführt, um eine eventuell mögliche Verseifung der Comonomeren und/oder Vernetzer zu vermeiden. Die Einstellung des pH-Wertes kann durch Zugabe geringer Mengen Basen wie Natriumhydroxid oder Ammoniak oder der üblichen Puffersalze wie Soda, Natriumhydrogencarbonat oder Natriumphosphat erfolgen. Der Ausschluß von Sauerstoff läßt sich dabei dadurch erreichen, daß der Polymerisationsansatz am Sieden gehalten wird, und/oder wie erwähnt mit Hilfe eines Inertgases wie Stickstoff. Die Polymerisationstemperatur kann hier 30 bis 150°C betragen. Vorzugsweise arbeitet man bei 40 bis 100°C.

Bisweilen kann es von Vorteil sein, zur völligen Entfernung von gelöstem Sauerstoff vor oder zu Beginn der Polymerisation geringe Mengen - 0,01 bis 1 Gew.-%, bezogen auf die Monomermischung, - eines Reduktionsmittels wie Natriumsulfit, Natriumpyrosulfit, Natriumdithionit, Ascorbinsäure und dergleichen zuzusetzen.

Bei einer besonders bevorzugten Ausführungsform der Fällungspolymerisation wird das wasserlösliche Comonomere (vorzugsweise NVP oder ein N-Vinyllactam), ein Teil des Vernetzers, Wasser und gegebenenfalls ein Puffer und ein Reduktionsmittel in einem schwachen Stickstoffstrom erhitzt, bis sich die ersten Polymerisatteilchen zeigen. Dann wird eine vorher durch Einblasen von Stickstoff inertisierte Mischung aus dem Vinylheterocyclus und dem restlichen Vernetzer und gegebenenfalls Wasser als Verdünnungsmittel innerhalb 0,2 bis 6 Stunden zugegeben.

Häufig kann der Start der Polymerisation durch Zugabe von 0,01 bis 5 Gew.-%, bezogen auf die Monomermischung, eines vernetzten, wenig quellbaren Polymerisates auf Basis von basischen Vinylheterocyclen mit einem pKₐ-Wert von mindestens 3,8 oder Vinyllactamen, insbesondere N-Vinylimidazol und N-Vinylpyrrolidon, beschleunigt werden.

Die Isolierung des anfallenden Polymeren aus der wäßrigen Suspension kann durch Filtration oder Zentrifugieren mit anschließendem Auswaschen mit Wasser und Trocknen in üblichen Trocknern wie Umluft- oder Vakuumtrockenschrank, Schaufeltrockner oder Stromtrockner erfolgen.

Die erfindungsgemäße Behandlung des Getränks besteht darin, daß man dieses während mindestens einer Minute, vorzugsweise mindestens einer Stunde, mit dem Polymerisat in Kontakt bringt. Dies kann chargenweise durch Zusatz des Polymerisates zum Getränk und Abtrennen oder kontinuierlich über eine mit dem Polymerisat gefüllte Säule, eine das Polymerisat enthaltende Filterschicht oder eine das Polymerisat enthaltende Membran erfolgen, wie dies beispielsweise in DE-A-41 19 288 im Prinzip beschrieben ist. Man kann das Polymerisat dem Getränk auch bei membranbasierten Filtrationen retentat- oder permeatseitig zusetzen. Die Einsatzmenge der Polymerisate als Sorptionsmittel richtet sich nicht nur nach der Ausgangsaluminiumionenkonzentration und der gewünschten Endkonzentration, sondern auch nach der für das Verfahren zur Verfügung stehenden Zeit und liegt im Bereich von 5 bis 2500, vorzugsweise 10 bis 250 g/100 l wäßrige Flüssigkeit. Wie die Anwendungsbeispiele zeigen, erfolgt schon nach überraschend kurzen Kontaktzeiten eine deutliche Absenkung der Aluminiumionenkonzentration. Längere Verweilzeiten erhöhen die Wirksamkeit der erfindungsgemäß verwendbaren Polymerisate jedoch weiter.

Das Polymerisat-Pulver ist geschmack- und geruchneutral und sehr gut filtrierbar. Die sensorische Qualität der Getränke wird bei einer Schönung mit diesen Polymerisaten nicht verändert. Das Bier behält sein ihm eigenes sortentypisches Aroma bei. Eine Regenerierung der Sorptionsmittel (Polymerisate) ist durch Behandlung mit verdünnten Säuren, vorzugsweise Mineralsäuren, problemlos möglich.

Obwohl die erfindungsgemäß verwendbaren Polymerisate unter Zusatz nur ganz geringer Vernetzermengen (vorzugsweise 1-4 %, bezogen auf das Gesamtgewicht der eingesetzten Monomere) hergestellt werden, sind sie in Wasser nur wenig quellbar. Sie bilden keine Gele. Im Unterschied dazu erhält man bei der Polymerisation der o.g. Monomere in wäßriger Lösung in Gegenwart eines Initiators und eines Vernetzers vernetzte Polymere vom Gel-Typ. Der Vernetzungsgrad und damit das Quellverhalten ist hier weitgehend abhängig von der Menge an zugegebenem Vernetzer. Um ein Polymerisat vom Gel-Typ herzustellen, das dasselbe Quellverhalten zeigt wie die erfindungsgemäß verwendbaren Polymerisate, benötigt man eine Vernetzermenge über 20 Gew.-%. Diese stark vernetzten Gele besitzen aufgrund ihrer Morphologie ein deutlich schlechteres Sorptionsvermögen gegenüber Aluminiumionen als die erfindungsgemäß einsetzbaren porösen Polymerisate. Polymerisate vom Gel-Typ mit einem Vernetzeranteil unter 5 % quellen sehr stark. Solche stark quellbaren Polymerisate haben bezüglich Herstellung, allgemeiner Handhabung und Anwendung schwerwiegende Nachteile: Sie verstopfen das Reaktionsgefäß, können weder gerührt noch ausgeschüttet werden, und die Trocknung erfordert das Verdampfen großer Lösungsmittelmengen. Sie müssen zum Gebrauch vorgequollen werden und sind in diesem Zustand nicht schüttfähig. Sie zeigen ein unbefriedigendes Anschwemmverhalten auf die Filterschicht und bilden keinen lockeren Filterkuchen. Sie sind damit im Gegensatz zu den erfindungsgemäß verwendbaren Polymerisaten nicht leicht filtrierbar. Weiterhin neigen Säulen, die mit den Polymerisaten vom Gel-Typ gefüllt sind, zum Verstopfen. In Membranen sind die Polymerisate vom Gel-Typ im Gegensatz zu den erfindungsgemäß einzusetzenden Polymeren nicht verwendbar.

Die erfindungsgemäß einzusetzenden Polymerisate eines basischen Vinylheterocyclus können auch gemeinsam mit einem Popcornpolymeren oder -copolymeren von Vinylpyrrolidon (VP) eingesetzt werden, wenn außer Aluminium- (und gegebenenfalls Schwermetall-)ionen auch Polyphenole aus dem Getränk (Bier oder Wein) entfernt werden sollen.

Die in den Beispielen verwendeten Teile und Prozente beziehen sich auf das Gewicht. Das in den Beispielen 1 und 2a eingesetzte Polymere war hergestellt aus 90 Gew.-% Vinylimidazol (VI), 7 % Vinylpyrrolidon (VP) und 3 % N,N'-Divinylethylenharnstoff. Für Beispiel 2b wurde ein Polymer folgender Zusammensetzung eingesetzt:
64 % VI, 33 % VP und 3 % N,N'-Divinylethylenharnstoff. Bei Beispiel 2c enthielt das Polymer 78 % VI, 19 % VP und 3 % N,N'-Divinylethylenharnstoff.

### Beispiel 1

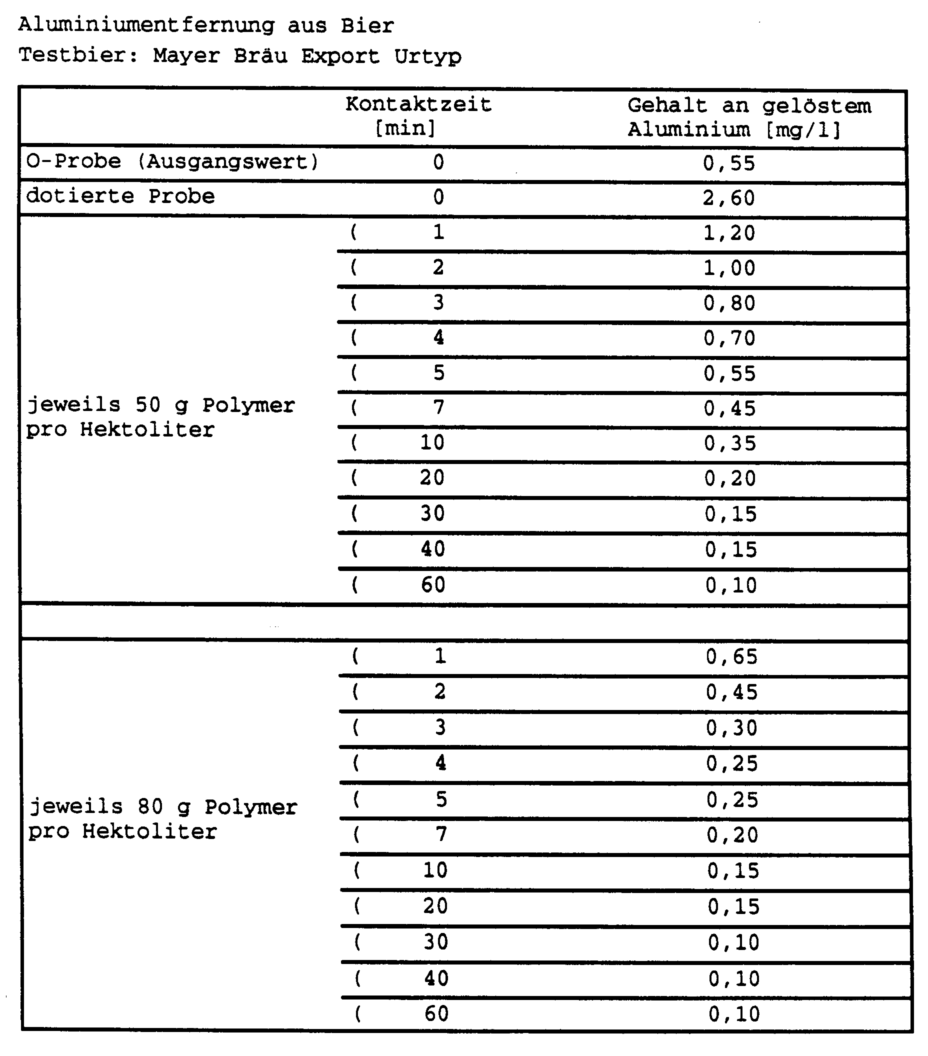

### Beispiel 2

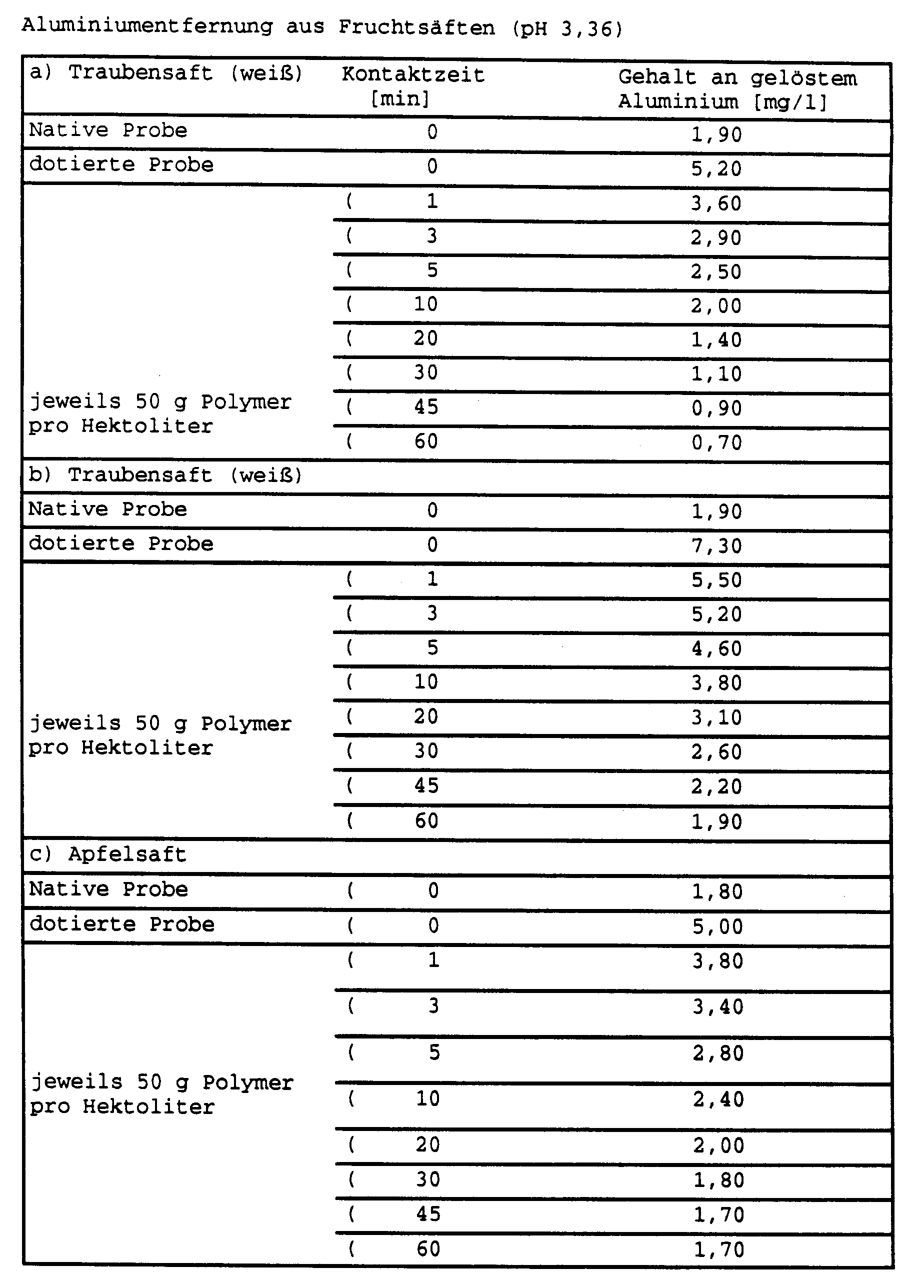

## Patentansprüche

1. Verfahren zur Entfernung von Aluminiumionen aus Getränken, dadurch gekennzeichnet, daß man das Getränk pro 100 l mit 5 bis 2500 g eines Polymerisates behandelt, das 50 bis 99,5 Gew.-% mindestens eines basischen Vinylheterocyclus mit einem pkₐ-Wert von mindestens 3,8 und 0 bis 49,5 Gew.-% eines anderen copolymerisierbaren Monomeren einpolymerisiert enthält, und das unter Ausschluß von Sauerstoff und von Polymerisationsinitiatoren sowie in Gegenwart von 0,5 bis 10 Gew.-%, bezogen auf die Monomeren, eines Vernetzers hergestellt worden ist.

2. Verfahren nach Anspruch 1, dadurch gekennzeichnet, daß ein Polymerisat eingesetzt wird, das als basischen Vinylheterocyclus N-Vinylimidazol oder 2-Methyl-1-vinylimidazol oder eine Mischung von beiden einpolymerisiert enthält.

3. Verfahren nach Anspruch 1 oder 2, dadurch gekennzeichnet, daß ein Polymerisat eingesetzt wird, das als Comonomer ausschließlich N-Vinylpyrrolidon oder N-Vinylcaprolactam oder eine Mischung von beiden einpolymerisiert enthält.

4. Verfahren nach einem der Ansprüche 1 bis 3, dadurch gekennzeichnet, daß ein Polymerisat eingesetzt wird, das als Vernetzer N,N'-Divinylethylenharnstoff einpolymerisiert enthält.

5. Verfahren nach einem der Ansprüche 1 bis 4, dadurch gekennzeichnet, daß ein Polymerisat eingesetzt wird, das in Gegenwart eines Reduktionsmittels hergestellt worden ist.

6. Verfahren nach einem der Ansprüche 1 bis 5, dadurch gekennzeichnet, daß ein Polymerisat eingesetzt wird, das in Gegenwart von Wasser bei 30 bis 150°C hergestellt worden ist.

7. Verfahren nach einem der Ansprüche 1 bis 6, dadurch gekennzeichnet, daß ein Polymerisat eingesetzt wird, das ohne Lösungsmittel bei 100 bis 200°C hergestellt worden ist.

8. Verfahren nach einem der Ansprüche 1 bis 7, dadurch gekennzeichnet, daß als Getränk Bier oder Fruchtsaft eingesetzt wird. 9. Verfahren nach einem der Ansprüche 1 bis 8, dadurch gekennzeichnet, daß das eingesetzte Polymer Bestandteil einer Filterschicht oder Membran ist.

## Claims

1. A process for removing aluminum ions from beverages, which comprises treating the beverage with from 5 to 2500 g per 100 l of a polymer which contains, copolymerized, from 50 to 99.5 % by weight of at least one basic vinyl heterocycle having a pkₐ of at least 3.8 and from 0 to 49.5 % by weight of another copolymerizable monomer and which was prepared in the absence of oxygen and polymerization initiators and in the presence of from 0.5 to 10 % by weight, based on the monomers, of a crosslinker.

2. A process as claimed in claim 1, wherein a polymer is used which contains, copolymerised, as basic vinyl heterocycle, N-vinylimidazole or 2-methyl-1-vinylimidazole or a mixture of both.

3. A process as claimed in claim 1 or 2, wherein a polymer is used which contains, copolymerized, as comonomer, exclusively N-vinylpyrrolidone or N-vinylcaprolactam or a mixture of both.

4. A process as claimed in one of claims 1 to 3, wherein a polymer is used which contains, copolymerized, as crosslinker, N,N'-divinylethyleneurea.

5. A process as claimed in one of claims 1 to 4, wherein a polymer is used which was prepared in the presence of a reducing agent.

6. A process as claimed in one of claims 1 to 5, wherein a polymer is used which was prepared in the presence of water at from 30 to 150°C.

7. A process as claimed in one of claims 1 to 6, wherein a polymer is used which was prepared without a solvent at from 100 to 200°C.

8. A process as claimed in one of claims 1 to 7, wherein the beverage used is beer or fruit juice.

9. A process as claimed in one of claims 1 to 8, wherein the polymer used is a component of a filter sheet or membrane.

## Revendications

1. Procédé pour éliminer les ions aluminium contenus dans des boissons, caractérisé par le fait que l'on traite la boisson par 5 à 2500 g, pour 100 l de la boisson, d'un polymère contenant à l'état polymérisé 50 à 99,5 % en poids d'au moins un composé hétérocyclique vinylique basique, présentant une valeur de pKa d'au moins 3,8 et 0 à 49,5 % en poids d'un autre monomère copolymérisable, ce polymère ayant été préparé à l'abri de l'oxygène, sans utilisation d'inducteurs de polymérisation et en présence de 0,5 à 10 % en poids, par rapport aux monomères, d'un agent réticulant.

2. Procédé selon la revendication 1, caractérisé par le fait que l'on utilise un polymère qui contient à l'état polymérisé, en tant que composé hétérocyclique vinylique basique, le N-vinylimidazole ou le 2-méthyl-1-vinylimidazole ou un mélange des deux.

3. Procédé selon la revendication 1 ou 2, caractérisé par le fait que l'on utilise un polymère qui contient en tant que comonomère, à l'état polymérisé, exclusivement la N-vinylpyrrolidone ou le N-vinylcaprolactame ou un mélange des deux.

4. Procédé selon l'une des revendications 1 à 3, caractérisé par le fait que l'on utilise un polymère contenant en tant qu'agent réticulant, à l'état polymérisé, la N,N'-divinyléthylèneurée.

5. Procédé selon l'une des revendications 1 à 4, caractérisé par le fait que l'on utilise un polymère qui a été préparé en présence d'un agent réducteur.

6. Procédé selon l'une des revendications 1 à 5, caractérisé par le fait que l'on utilise un polymère qui a été préparé en présence d'eau à des températures de 30 à 150°C.

7. Procédé selon l'une des revendications 1 à 6, caractérisé par le fait que l'on utilise un polymère qui a été préparé sans solvant, à des températures de 100 à 200°C.

8. Procédé selon l'une des revendications 1 à 7, caractérisé par le fait que la boisson traitée consiste en bière ou jus de fruit.

9. Procédé selon l'une des revendications 1 à 8, caractérisé par le fait que le polymère utilisé est constituant d'une couche filtrante ou d'une membrane.
